# DEMANDE DE BREVET EUROPEEN

(11) **EP 3 799 079 A1**
(43) Date de publication de la demande: **31.03.2021**
(21) Numéro de dépôt: 20198463.0
(22) Date de dépôt: 25.09.2020
(51) Int. Cl.: H01B 3/44, C08L 23/04, C08L 51/06

(54) **COUCHE RÉTICULÉE POUR CÂBLE**

(30) Priorité: 26.09.2019 FR 1910627
(71) Demandeur: Nexans, 92400 Courbevoie (FR)
(72) Inventeur: LARCHE, Jean-François, 69250 FLEURIEU-SUR-SAONE (FR); LOMRI, Linda, 69330 MEYZIEU (FR)
(74) Mandataire: Ipsilon

(57) **Abrégé**

La présente invention concerne un câble comprenant un élément conducteur allongé entouré par au moins une couche réticulée silane obtenue à partir d'une composition chargée comprenant un premier polymère greffé silane, un deuxième polymère greffé silane, au moins une charge ignifugeante, et au moins un agent ignifugeant.

## Description

La présente invention concerne un câble comprenant au moins une couche réticulée silane chargée, ainsi qu'un procédé de fabrication d'un tel câble.

Elle s'applique typiquement, mais non exclusivement, à la fabrication de couches réticulées du type isolation et/ou protection pour câble. De préférence, la présente invention concerne un câble électrique du type basse tension (notamment inférieure à 6kV), pouvant être notamment utilisé dans le domaine du bâtiment.

Dans le domaine de la câblerie, la technique actuelle pour préparer une couche réticulée silane chargée, notamment avec des charges ignifugeantes, est le procédé « Sioplas » bien connu de l'homme du métier, opérant en deux étapes. La première étape consiste à obtenir une polyoléfine greffée silane, et la deuxième étape consiste à mélanger la polyoléfine greffée silane avec notamment des charges, ce mélange étant ensuite destiné à être réticulé. La réticulation peut être ensuite réalisée par des techniques bien connues de l'homme du métier.

Toutefois, les propriétés mécaniques de la couche réticulée ainsi obtenue, comme ses propriétés diélectriques et/ou rhéologiques, peuvent être impactées négativement par l'incorporation d'une quantité importante de charge ignifugeante.

Le but de la présente invention est de pallier les inconvénients des techniques de l'art antérieur en proposant notamment un câble comprenant une couche réticulée silane chargée présentant des propriétés mécaniques améliorées tout en garantissant les propriétés ignifugeantes liées aux charges présentes dans la couche réticulée.

La présente invention a pour objet un câble comprenant un élément conducteur allongé entouré par au moins une couche réticulée silane obtenue à partir d'une composition chargée comprenant :
- un premier polymère greffé silane,
- un deuxième polymère greffé silane,
- au moins une charge ignifugeante, et
- au moins un agent ignifugeant, de préférence l'agent ignifugeant étant différent de la charge ignifugeante.

Grâce à l'invention, le câble présente des propriétés mécaniques, telles que par exemple un allongement à la rupture et/ou une résistance à la traction, améliorées, tout en garantissant de très bonnes propriétés ignifugeantes ou de non propagation de l'incendie.

Avantageusement, la couche réticulée du câble de l'invention peut avoir :
- un allongement à la rupture d'au moins 125 %, de préférence d'au moins 140 %, et de préférence d'au moins 150 %, selon la norme IEC 60811-501 (2018), et/ou
- une résistance à la traction d'au moins 10,0 MPa, de préférence d'au moins 12,0 MPa, et de préférence d'au moins 14,0 MPa, selon la norme IEC 60811-501(2018).

La couche réticulée silane pour câble selon l'invention est facile à mettre en œuvre, notamment grâce à une viscosité Mooney (ML1 + 4) à 150° C d'au plus 40 MU, et de préférence d'au plus 30 MU.

En outre, la composition chargée de l'invention, lorsqu'elle est destinée à être extrudée pour la fabrication du câble, peut être extrudée à vitesse élevée, notamment à une vitesse d'au moins 100 m/min, et pouvant aller jusqu'à 400 m/min et au-delà.

Dans la présente invention, on entend par le terme « polymère » (greffé ou non greffé) tout type de polymères bien connu de l'homme du métier, tels que les homopolymères ou les copolymères (e.g. copolymère séquencé, copolymère statistique, terpolymère, ...etc).

Les polymères greffés silane sont plus particulièrement des polymères organiques auxquels ont été greffés au moins un composé silane. Ainsi, les polymères non greffés silane, utilisés pour obtenir les polymères greffés silane, sont de préférence des polymères organiques.

Les polymères greffés ou non greffés silane de l'invention peuvent être avantageusement des polymères d'oléfine (polyoléfines) ou, en d'autres termes, des homo- ou co-polymères d'oléfine.

De préférence, les polymères greffés ou non greffés silane de l'invention peuvent être des polymères d'éthylène, ne comprenant pas de monomère de propylène.

Dans la composition chargée de l'invention, le premier polymère greffé silane peut être une polyoléfine greffée silane, et de préférence un polymère d'éthylène greffé silane.

A titre d'exemple, le premier polymère greffé silane peut être choisi parmi un polyéthylène linéaire basse densité (LLDPE) greffé silane, un polyéthylène basse densité (LDPE) greffé silane, un polyéthylène moyenne densité (MDPE) greffé silane, un polyéthylène haute densité (HDPE) greffé silane, un copolymère d'éthylène et d'alpha-oléfine greffé silane tel qu'un copolymère d'éthylène et de propylène (EPR) greffé silane, un terpolymère d'éthylène et de propylène (EPT) greffé silane tel que par exemple un terpolymère d'éthylène propylène diène monomère (EPDM) greffé silane.

Dans la présente invention, l'expression « polyéthylène basse densité » signifie un polyéthylène ayant une densité d'au plus 0,925 g/cm³ environ, et de préférence allant de 0,910 à 0,925 g/cm³ environ, ladite densité étant mesurée selon la norme ISO 1183A (à une température de 23°C).

Dans la présente invention, l'expression « polyéthylène moyenne densité » signifie un polyéthylène ayant une densité allant de 0,926 à 0,940 g/cm³ environ, ladite densité étant mesurée selon la norme ISO 1183A (à une température de 23°C).

Dans la présente invention, l'expression « polyéthylène haute densité » signifie un polyéthylène ayant une densité allant de 0,941 à 0,965 g/cm³ environ, ladite densité étant mesurée selon la norme ISO 1183A (à une température de 23°C).

Dans un mode de réalisation particulièrement préféré, le premier polymère greffé silane est un polyéthylène linéaire basse densité (LLDPE) greffé silane.

Le deuxième polymère greffé silane est notamment différent du premier polymère greffé silane.

Le deuxième polymère greffé silane peut être une polyoléfine greffée silane, et de préférence un polymère d'éthylène greffé silane.

A titre d'exemple, le deuxième polymère greffé silane peut être choisi parmi un polyéthylène linéaire basse densité (LLDPE) greffé silane, un polyéthylène basse densité (LDPE) greffé silane, un polyéthylène moyenne densité (MDPE) greffé silane, un polyéthylène haute densité (HDPE) greffé silane, un copolymère d'éthylène et d'alpha-oléfine greffé silane tel qu'un copolymère d'éthylène et d'octène (PEO) greffé silane, un terpolymère d'éthylène et de propylène (EPT) greffé silane tel que par exemple un terpolymère d'éthylène propylène diène monomère (EPDM) greffé silane.

Dans un mode de réalisation particulièrement préféré, le deuxième polymère greffé silane est un copolymère d'éthylène et d'octène (PEO) greffé silane.

La couche réticulée silane de l'invention comprend notamment au moins deux polymères greffés silane différents, ces polymères greffés silane comprenant respectivement des liaisons siloxane (-Si-O-Si-).

La composition chargée de l'invention comprend en outre au moins une charge ignifugeante, la charge ignifugeante étant notamment destinée à réduire ou empêcher les phénomènes de combustion.

Une charge est une substance solide dispersée dans la composition chargée.

La charge ignifugeante est de préférence une charge non halogénée.

La charge ignifugeante est de préférence une charge ignifugeante apte à libérer des molécules d'eau sous l'action de la chaleur.

La charge ignifugeante peut être une charge naturelle ou une charge précipité (non naturelle), ce type de charge étant bien connue de l'homme du métier. En outre, la charge ignifugeante peut avoir ou non subi un traitement de surface pour notamment améliorer sa compatibilité avec les polymères, les traitements de surface pour les charges étant bien connus de l'homme du métier.

Dans un mode de réalisation particulier, la charge ignifugeante peut être un hydroxyde métallique, choisie notamment parmi le trihydroxyde d'aluminium (ATH), le dihydroxyde de magnésium (MDH), et un de leur mélange.

La composition chargée de l'invention peut comprendre au moins 100 parties en poids de charge(s) ignifugeante(s), et de préférence au moins 150 parties en poids de charge(s) ignifugeante(s), pour 100 parties en poids de polymères dans la composition chargée.

La composition chargée de l'invention peut comprendre au plus 250 parties en poids de charge(s) ignifugeante(s), et de préférence au plus 200 parties en poids de charge(s) ignifugeante(s), pour 100 parties en poids de polymères dans la composition chargée.

La composition chargée de l'invention comprend en outre au moins un agent ignifugeant, l'agent ignifugeant étant notamment différent de la charge ignifugeante.

Un agent ignifugeant est différent d'une charge ignifugeante. En particulier, l'agent ignifugeant n'est pas un solide mais est une substance liquide, de préférence une huile.

De préférence, l'agent ignifugeant est une huile silicone, ou en d'autres termes une huile comprenant au moins un polyorganosiloxane. Le polyorganosiloxane est un oligomère ou un polymère de silicone comprenant dans sa chaine macromoléculaire des liaisons -Si-O-Si-. L'agent ignifugeant est donc plus particulièrement un polymère inorganique. Ainsi, l'huile silicone n'entre pas dans le calcul de la quantité totale en poids de polymères dans la composition chargée de l'invention (i.e. 100 parties en poids de polymères), la quantité de polymère dans la composition chargée étant notamment déterminée par rapport à l'ensemble des polymères organiques mis en œuvre.

L'huile silicone peut avoir une viscosité (cinématique) à 25°C allant de 10 à 60000 mm²/s (ou cSt), de préférence allant de 100 à 30000 mm²/s (ou cSt), et de préférence allant de 1000 à 15000 mm²/s (ou cSt), selon la norme l'ASTM D2393 (1986).

La composition chargée de l'invention peut comprendre au moins 5,0 parties en poids d'agent(s) ignifugeant(s), et de préférence au moins 10,0 parties en poids d'agent(s) ignifugeant(s), pour 100 parties en poids de polymères dans la composition chargée.

La composition chargée de l'invention peut comprendre au plus 30,0 parties en poids d'agent ignifugeant(s), et de préférence au plus 20,0 parties en poids d'agent ignifugeant(s), pour 100 parties en poids de polymères dans la composition chargée.

La composition chargée de l'invention peut comprendre en outre au moins un antioxydant.

Les antioxydants permettent avantageusement de protéger la couche réticulée silane des contraintes thermiques engendrées lors des étapes de fabrication du câble et/ou de fonctionnement du câble.

A titre d'exemple, les antioxydants peuvent être choisis parmi :
- les antioxydants phénoliques à encombrement stérique, tels que le tetrakisméthylene(3,5-di-t-butyl-4-hydroxy-hydrocinnamate) méthane, le octadecyl 3-(3,5-di-t-butyl-4-hydroxyphényle)propionate, le 2,2'- thiodiéthylène bis[3-(3,5-di-t-butyl-4-hydroxyphényle) propionate], le 2,2'-Thiobis(6-t-butyle-4-méthylephénol), le 2,2'-méthylenebis(6-t-butyle-4-méthylphénol), le 1,2-Bis(3,5-di-t-butyle-4-hydroxyhydrocinnamoyl) hydrazine, et le 2,2'-oxamido-bis[éthyl 3(3,5-di-t-butyle-4-hydroxyphényle) propionate] ;
- les thioéthers, tels que le 4,6-bis(octylthiométhyle)-o-crésol, le bis[2-méthyle-4-{3-n-alkyle (C12 ou C14)thiopropionyloxy}-5-t-butylphényle]sulfide et le thiobis-[2-t-butyl-5-méthyle-4,1-phénylène] bis [3-(dodecyltio)propionate] ;
- les antioxydants à base de soufre, tels que le Dioctadecyl-3,3'-thiodipropionate ou le Didodecyl-3,3'-thiodipropionate ;
- les antioxydants à base de phosphore, tels que les phosphites ou phosphonates comme par exemple le Tris(2,4-di-t-butyl-phényle)phosphite ou le Bis(2,4-di-t-butylphényle) pentaerythritol diphosphite ; et
- les antioxydants, de type amine tels que les phénylènes diamines (IPPD, 6PPD....), les diphénylamines styrènés, les diphénylamines, les mercapto benzimidazoles et le 1,2 dihydro-2,2,4-trimethylquinoline polymérisé (TMQ).

Le type d'antioxydant et son taux dans la composition chargée peuvent être choisis en fonction de la température maximale subie par les polymères pendant leur mise en œuvre, notamment par extrusion, ainsi que de la durée maximale d'exposition à cette température.

La composition chargée de l'invention peut comprendre de 0,1 à 5,0 parties en poids d'antioxydant(s) pour 100 parties en poids de polymères dans la composition chargée.

La composition chargée de l'invention peut comprendre en outre au moins un catalyseur de réticulation bien connu de l'homme du métier, tel que par exemple un catalyseur à base d'étain comme le dilaurate de dibutylétain (DBTL) ou le dioctyltin dithioglycolate.

Le catalyseur de réticulation peut être ajouté à la composition chargée préalablement mise sous forme de granulés.

Le catalyseur de réticulation peut être ajouté à la composition chargée, sous forme d'un mélange maître à base d'un polymère, notamment d'un polymère d'oléfine.

La composition chargée peut comprendre avantageusement au plus 0,4 partie en poids de catalyseur de réticulation, de préférence au plus 0,1 partie en poids de catalyseur de réticulation, et de préférence au plus 0,01 partie en poids de catalyseur de réticulation, pour 100 parties en poids de polymères dans la composition chargée.

La composition chargée peut comprendre au moins 0,00001 partie en poids de catalyseur de réticulation, de préférence au moins 0,0001 partie en poids de catalyseur de réticulation, et de préférence au moins 0,0005 partie en poids de catalyseur de réticulation, pour 100 parties en poids de polymères dans la composition chargée.

Dans la présente invention, la couche réticulée silane peut avoir une épaisseur allant de 0,1 mm à 2,0 mm, et de préférence allant de 0,4 mm à 1,4 mm.

La couche réticulée silane peut être avantageusement une couche isolante, et de préférence une couche électriquement isolante.

On entend par "couche électriquement isolante" une couche dont la conductivité électrique peut être d'au plus 1.10⁻⁹ S/m (siemens par mètre) (à 25°C).

La couche réticulée silane peut être de préférence une couche extrudée, par des techniques bien connues de l'homme du métier.

La vitesse d'extrusion peut être avantageusement élevée, et notamment peut aller de 100 à 400 m/min.

Dans un mode de réalisation particulier, la couche réticulée silane peut être directement en contact physique avec l'élément conducteur allongé.

L'élément conducteur allongé du câble de l'invention peut être de préférence un conducteur électrique. A titre d'exemple, le conducteur électrique peut être un monoconducteur tel que par exemple un fil métallique, ou un multiconducteur tel qu'une pluralité de fils métalliques, torsadés ou non.

L'élément conducteur allongé peut être réalisé à partir d'un matériau métallique notamment choisi parmi l'aluminium, un alliage d'aluminium, du cuivre, un alliage de cuivre, et une de leurs combinaisons.

Dans un mode de réalisation particulier, la couche réticulée silane peut être entourée par une gaine de protection, notamment une gaine en matériau polymère. A titre d'exemple, le matériau polymère peut être réticulé ou non, et constitué d'un ou de plusieurs polymère(s) d'oléfine, et/ou de polychlorure de vinyle (PVC).

Un autre objet de l'invention concerne un procédé de fabrication d'un câble tel que décrit ci-avant, caractérisé en ce qu'il comprend les étapes suivantes :
i. préparer une composition silane comprenant un premier polymère non greffé silane, un deuxième polymère non greffé silane, et un système de réticulation silane comprenant au moins un composé silane, pour obtenir le premier polymère greffé silane et le deuxième polymère greffé silane ;
ii. préparer une composition chargée telle que définie dans la présente invention, à partir de la composition silane de l'étape i, la composition chargée comprenant notamment le premier polymère greffé silane et le deuxième polymère greffé silane obtenus à l'étape i, et ladite charge ignifugeante et ledit agent ignifugeant ; et
iii. extruder la composition chargée obtenue à l'étape ii, autour de l'élément conducteur allongé ;
afin de former la couche réticulée silane.

Les conditions opératoires pour réaliser les étapes i à iii sont celles utilisées classiquement pour le procédé Sioplas, bien connu de l'homme du métier.

L'étape iii peut notamment comprendre l'ajout du catalyseur de réticulation mentionné dans la présente invention.

Après l'étape iii, la couche extrudée autour de l'élément conducteur allongé est notamment réticulée pour former la couche réticulée silane.

La réticulation se fait de préférence en présence d'humidité, l'humidité pouvant être par exemple une atmosphère humide ou une immersion dans de l'eau.

Le premier polymère greffé silane de l'invention peut être obtenu à partir du premier polymère non greffé silane.

Le premier polymère non greffé silane peut être un polymère ayant une température de fusion pouvant aller de 80 à 180 °C, de préférence de 100 à 170 °C, et de façon particulièrement préférée de 100 à 150 °C.

Dans la présente invention, la température de fusion d'un polymère peut être classiquement mesurée au pic de fusion sur un thermogramme obtenu par analyse calorimétrique différentielle (DSC) avec une rampe de température de 10°C/min sous atmosphère d'azote.

Le premier polymère non greffé silane peut avoir un indice de fluidité allant de 0,5 à 5 g/10 min, et de préférence allant de 3 à 4 g/10 min, mesuré à 190°C avec une charge de 2,16 kg selon la norme ASTM D1238-00.

Dans un mode de réalisation préféré, le premier polymère non greffé silane peut être un polymère apolaire, et de préférence un polymère d'oléfine apolaire. Le polymère apolaire ne comporte ainsi sensiblement pas de groupements polaires tels que par exemple des groupements acrylate, carboxylique ou vinyle acétate.

De préférence, le premier polymère non greffé silane peut être une polyoléfine, et de préférence un polymère d'éthylène.

A titre d'exemple, le premier polymère non greffé silane peut être choisi parmi un polyéthylène linéaire basse densité (LLDPE), un polyéthylène basse densité (LDPE), un polyéthylène moyenne densité (MDPE), un polyéthylène haute densité (HDPE), un copolymère d'éthylène et d'alpha-oléfine tel qu'un copolymère d'éthylène et de propylène (EPR), un terpolymère d'éthylène et de propylène (EPT) tel que par exemple un terpolymère d'éthylène propylène diène monomère (EPDM).

Dans un mode de réalisation particulièrement préféré, le premier polymère non greffé silane est un polyéthylène linéaire basse densité (LLDPE).

Le deuxième polymère greffé silane de l'invention peut être obtenu à partir du deuxième polymère non greffé silane.

Le deuxième polymère non greffé silane est notamment différent du premier polymère non greffé silane.

Le deuxième polymère non greffé silane peut être un polymère ayant une température de fusion pouvant aller de 50 à 100 °C, et de préférence de 60 à 80 °C.

L'indice de fluidité du deuxième polymère non greffé silane (mesuré à 190°C avec une charge de 2,16 kg selon la norme ASTM D1238-00) peut être avantageusement inférieur à celui du premier polymère non greffé silane.

Le deuxième polymère non greffé silane peut avoir un indice de fluidité allant de 0,5 à 5 g/10 min, et de préférence allant de 2 à 4 g/10 min, mesuré à 190°C avec une charge de 2,16 kg selon la norme ASTM D1238-00.

Dans un mode de réalisation préféré, le deuxième polymère non greffé silane peut être un polymère apolaire, et de préférence un polymère d'oléfine apolaire. Le polymère apolaire ne comporte ainsi sensiblement pas de groupements polaires tels que par exemple des groupements acrylate, carboxylique ou vinyle acétate.

De préférence, le deuxième polymère non greffé silane peut être une polyoléfine, et de préférence un polymère d'éthylène.

A titre d'exemple, le deuxième polymère non greffé silane peut être choisi parmi un polyéthylène linéaire basse densité (LLDPE), un polyéthylène basse densité (LDPE), un polyéthylène moyenne densité (MDPE), un polyéthylène haute densité (HDPE), un copolymère d'éthylène et d'alpha-oléfine tel qu'un copolymère d'éthylène et d'octène (PEO), un terpolymère d'éthylène et de propylène (EPT) tel que par exemple un terpolymère d'éthylène propylène diène monomère (EPDM).

Dans un mode de réalisation particulièrement préféré, le deuxième polymère non greffé silane est un copolymère d'éthylène et d'octène (PEO).

La composition silane peut comprendre de préférence une quantité de premier polymère non greffée silane supérieure à celle du deuxième polymère non greffée silane.

La composition silane peut avantageusement comprendre au moins 50 parties en poids du premier polymère non greffé silane, et de préférence au moins 70 parties en poids du premier polymère non greffé silane, pour 100 parties en poids de polymères dans la composition silane.

La composition silane peut avantageusement comprendre au moins 5 parties en poids du deuxième polymère non greffé silane, et de préférence au moins 10 parties en poids du deuxième polymère non greffé silane, pour 100 parties en poids de polymères dans la composition silane.

Dans un mode de réalisation particulièrement préféré, la composition silane comprend de 70 à 90 parties en poids du premier polymère non greffé silane, et de 10 à 30 parties en poids du deuxième polymère non greffé silane, pour 100 parties en poids de polymères dans la composition silane.

Dans la composition silane, le composé silane, bien connu de l'homme du métier, peut comprendre au moins une fonction insaturée et au moins un groupement hydrolysable, de préférence deux groupements hydrolysables (identiques ou différents), et de façon particulièrement préférée trois groupements hydrolysables (identiques ou différents).

Les groupements hydrolysables peuvent être des groupements alcoxysilanes et/ou des groupements carboxysilanes, de préférence des groupements alcoxysilanes.

A titre d'exemple, le composé silane peut être choisi parmi un alcoxysilane, le vinyl trimethoxy silane, le vinyl triéthoxy silane, et le vinyl tris(2-méthoxyéthoxy) silane.

La composition silane peut avantageusement comprendre au plus 10,0 parties en poids de composé silane, de préférence au plus 5,0 parties en poids de composé silane, et de préférence au plus 3,0 parties en poids de composé silane, pour 100 parties en poids de polymères dans la composition silane.

La composition silane peut comprendre au moins 0,5 partie en poids de composé silane, de préférence au moins 1,0 partie en poids de composé silane, de préférence au moins 1,5 parties en poids de composé silane, et de préférence au moins 2,0 parties en poids de composé silane, pour 100 parties en poids de polymères dans la composition silane.

La composition silane peut comprendre en outre un initiateur de réticulation. Plus particulièrement, le système de réticulation silane peut comprendre l'initiateur de réticulation.

L'initiateur de réticulation peut être choisi parmi le di(terbutylperoxypropyl-(2)-benzene, le peroxyde de dicumyle, le peroxyde de di-terbutyle, le peroxyde de benzoyle, le peroxyde de ter-butylcumyle, le 1,1-di(ter-butylperoxy)-3,3,5-trimethyl-cyclohexane, le 2,5-bis(terbutylperoxy)-2,5-dimethylhexane, le 2,5-bis(terbutylperoxy)-2,5-dimethylhexine, le terbutylperoxy-3,5,5-trimethyl hexanoate, l'ethyl 3,3-di(terbutylperoxy)butyrate, le butyl-4,4-di(terbutylperoxy) valerate, le terbutylperoxybenzoate, et un de leurs mélanges.

La composition silane peut avantageusement comprendre au plus 1,0 partie en poids d'initiateur de réticulation, de préférence au plus 0,5 partie en poids d'initiateur de réticulation, de préférence au plus 0,3 partie en poids d'initiateur de réticulation, et de préférence au plus 0,1 partie en poids d'initiateur de réticulation, pour 100 parties en poids de polymères dans la composition silane.

La composition silane peut comprendre au moins 0,001 partie en poids d'initiateur de réticulation, de préférence au moins 0,01 parties en poids d'initiateur de réticulation, et de préférence au moins 0,05 parties en poids d'initiateur de réticulation, pour 100 parties en poids de polymères dans la composition silane.

La composition silane de l'invention peut comprendre en outre au moins un antioxydant, l'antioxydant pouvant être un de ceux mentionnés dans la présente invention et dans les mêmes proportions que celles utilisées dans la composition chargée.

Selon un mode de réalisation particulier de l'invention, et afin de garantir un câble dit HFFR pour l'anglicisme "Halogen-Free Flame Retardant", le câble de l'invention, ou en d'autres termes les éléments qui composent ledit câble, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

D'autres caractéristiques et avantages de la présente invention apparaîtront à la lumière de la description d'un exemple non limitatif.

### Exemple

### Composition silane et composition chargée, selon l'invention

Le tableau 1 ci-dessous rassemble une composition silane selon l'invention, dont les quantités sont exprimées en parties en poids pour 100 parties en poids de polymères.

Les polymères constitutifs de la composition silane sont au nombre de deux, et forment 100 parties en poids de polymères.

**[Tableaux 1]**

| **Composition silane** | **Quantités** |
|---|---|
| Premier polymère non greffé silane | 80 |
| Deuxième polymère non greffé silane | 20 |
| Système de réticulation silane | 2,5 |

L'origine des composés du tableau 1 est la suivante :
- Premier polymère non greffé silane est un polyéthylène linéaire basse densité (LLDPE), ayant une densité de 0,924 g/cm³, un indice de fluidité de 3,5 g et une température de fusion de 124°C;
- Deuxième polymère non greffé silane est un copolymère d'éthylène et d'octène (PEO), ayant une densité de 0,882 g/cm³, un indice de fluidité de 3,0 g et une température de fusion de 74°C.; et
- Système de réticulation silane est un cocktail silane comprenant environ 96% en poids de vinyl trimethoxy silane et environ 4% en poids de peroxyde de dicumyle.

Le tableau 2 ci-dessous rassemble une composition chargée selon l'invention, comprenant deux polymères greffés silane obtenus à partir de la composition silane du tableau 1, les quantités de la composition chargée étant exprimées en parties en poids pour 100 parties en poids de polymères.

Les polymères constitutifs de la composition chargée sont au nombre de deux, et forment 100 parties en poids de polymères (i.e. Mélange de deux polymères greffés silane).

**[Tableaux 2]**

| **Composition chargée** | **Quantités** |
|---|---|
| Mélange de deux polymères greffés silane | 100 |
| Charge ignifugeante | 180 |
| Agent ignifugeant | 10 |
| Antioxydant | 1,5 |
| Mélange maître catalyseur | 0,34 |

L'origine des composés du tableau 2 est la suivante :
- Mélange de deux polymères greffés silane est le mélange obtenu à partir de la composition silane du tableau 1 ;
- Charge ignifugeante est un hydroxyde métallique du type trihydroxyde d'aluminium précipité et ne comprenant aucun traitement de surface ;
- Agent ignifugeant est une huile silicone ayant une viscosité de l'ordre de 12500 mm²/s (à 25°C) selon la norme ASTM D2393 (1986);
- Antioxydant est le 1,2 dihydro-2,2,4-trimethylquinoline polymérisé (TMQ);
- Mélange maître catalyseur est un mélange maître comprenant 0,36 partie en poids d'un catalyseur de réticulation à base d'étain du type dioctyltin dithioglycolate, pour 100 parties en poids de polyéthylène.

### Fabrication d'un câble comprenant une couche réticulée silane selon l'invention

Dans une première étape, les constituants de la composition silane du tableau 1 sont mélangés ensemble dans un premier mélangeur du type co-malaxeur, à une température comprise entre 120 et 200°C, afin d'obtenir un mélange de polymères greffés silane.

Des granulés de polymères greffés silane sont ensuite formés par des techniques bien connues de l'homme du métier.

Dans une deuxième étape, les constituants de la composition chargée du tableau 2 sont introduits dans un co-malaxeur à une température comprise entre 80 et 180°C.

Des granulés de polymères greffés silane chargés sont ensuite formés par des techniques bien connues de l'homme du métier.

Dans une troisième étape, on introduit dans une extrudeuse les granulés de polymères greffés silane chargés et le catalyseur de réticulation (sous forme de mélange maître), pour obtenir une couche extrudée autour d'un fil conducteur électrique de section 1.5 mm², et ainsi former un câble. La vitesse d'extrusion est de 200 m/min.

Le câble est alors plongé dans une piscine pendant 24 heures à 63°C, pour obtenir une couche réticulée silane.

### Résultats

Le tableau 3 ci-dessous rassemble les différentes propriétés mesurées sur la couche réticulée silane obtenue dans l'exemple ci-dessus.

**[Tableaux 3]**

| **Couche réticulée silane** | **Résultats** |
|---|---|
| Viscosité Mooney ML1+4, à 150°C | 29,4 MU |
| Allongement à la rupture selon la norme IEC 60811-501 (2018) | 157 % |
| Résistance à la traction selon la norme IEC 60811-501 (2018) | 14,2 MPa |
| Hot set test (24 h - 63°C) selon la norme IEC 60811-507 (2018) : Allongement sous charge | 50 % |
| Hot set test (24 h - 63°C) selon la norme IEC 60811-507 (2018) : Allongement rémanent | 0 % |
| Test de propagation verticale de la flamme, selon la norme IEC 60332-2-2 (2005) : H1 | 385 mm |
| Test de propagation verticale de la flamme, selon la norme IEC 60332-2-2 (2005) : H2 | 470 mm |
| Test de propagation verticale de la flamme, selon la norme IEC 60332-2-2 (2005) : temps d'extinction | 0 s |

## Revendications

1. Câble comprenant un élément conducteur allongé entouré par au moins une couche réticulée silane obtenue à partir d'une composition chargée comprenant :
- un premier polymère greffé silane,
- un deuxième polymère greffé silane,
- au moins une charge ignifugeante, et
- au moins un agent ignifugeant, ledit agent ignifugeant étant une huile.

2. Câble selon la revendication 1, **caractérisé en ce que** le premier polymère greffé silane est un polymère d'éthylène greffé silane.

3. Câble selon la revendication 1 ou 2, **caractérisé en ce que** le deuxième polymère greffé silane est un polymère d'éthylène greffé silane, différent du premier polymère greffé silane.

4. Câble selon l'une quelconque des revendications précédentes, **caractérisé en ce que** la charge ignifugeante est choisi parmi parmi le trihydroxyde d'aluminium (ATH), le dihydroxyde de magnésium (MDH), et un de leur mélange.

5. Câble selon l'une quelconque des revendications précédentes, **caractérisé en ce que** la composition chargée comprend au moins 100 parties en poids de charge ignifugeante pour 100 parties en poids de polymères.

6. Câble selon l'une quelconque des revendications précédentes, **caractérisé en ce que** l'agent ignifugeant est une huile silicone.

7. Câble selon l'une quelconque des revendications précédentes, **caractérisé en ce que** l'agent ignifugeant a une viscosité à 25°C allant de 10 à 60000 mm²/s, de préférence allant de 100 à 30000 mm²/s, et de préférence allant de 1000 à 15000 mm²/s, selon la norme l'ASTM D2393 (1986).

8. Câble selon l'une quelconque des revendications précédentes, **caractérisé en ce que** la composition chargée comprend au moins 5,0 parties en poids d'agent ignifugeant pour 100 parties en poids de polymères dans la composition chargée.

9. Câble selon l'une quelconque des revendications précédentes, **caractérisé en ce que** la composition chargée comprend en outre au moins un catalyseur de réticulation.

10. Câble selon la revendication précédente, **caractérisé en ce que** la composition chargée comprend au plus 0,4 partie en poids de catalyseur de réticulation pour 100 parties en poids de polymères dans la composition chargée.

11. Câble selon l'une quelconque des revendications précédentes, **caractérisé en ce que** la couche réticulée silane est une couche isolante.

12. Câble selon l'une quelconque des revendications précédentes, **caractérisé en ce que** la couche réticulée silane est une couche extrudée.

13. Câble selon l'une quelconque des revendications précédentes, **caractérisé en ce que** la couche réticulée silane est directement en contact physique avec l'élément conducteur allongé.

14. Câble selon l'une quelconque des revendications précédentes, **caractérisé en ce que** la couche réticulée silane est entourée par une gaine de protection.

15. Procédé de fabrication d'un câble selon l'une quelconque des revendications précédentes, **caractérisé en ce qu'**il comprend les étapes suivantes :
i. préparer une composition silane comprenant un premier polymère non greffé silane, un deuxième polymère non greffé silane, et un système de réticulation silane comprenant au moins un composé silane, pour obtenir le premier polymère greffé silane et le deuxième polymère greffé silane ;
ii. préparer une composition chargée comprenant le premier polymère greffé silane et le deuxième polymère greffé silane obtenus à l'étape i, la composition chargée comprenant en outre ladite charge ignifugeante, et ledit agent ignifugeant ; et
iii. extruder la composition chargée obtenue à l'étape ii, autour de l'élément conducteur allongé ;
afin de former la couche réticulée silane.
